# EUROPÄISCHE PATENTSCHRIFT

(11) **EP 0 598 222 B1**
(45) Veröffentlichungstag und Bekanntmachung des Hinweises auf die Patenterteilung: **08.05.1996**
(21) Anmeldenummer: 93116676.3
(22) Anmeldetag: 15.10.1993
(51) Int. Cl.: F16K 5/20, F16K 37/00

(54) **Kugelhahn**
Ball valve
Robinet à tournant sphérique

(30) Priorität: 17.11.1992 DE 4238812
(43) Veröffentlichungstag der Anmeldung: 25.05.1994
(73) Patentinhaber: DEUTSCHE AUDCO GmbH, D-25497 Prisdorf (DE); RUHRGAS AKTIENGESELLSCHAFT, D-45138 Essen (DE)
(72) Erfinder: Bülow, Manfred, Dipl.-Ing., D-25421 Pinneberg (DE); Borchert, Detlef, Dr.-Ing. Dipl.-Ing., D-25368 Kiebitzreihe (DE); Lembser, Gerhard, Dipl.-Ing., D-53639 Königswinter (DE)
(74) Vertreter: Dipl.-Ing. H. Hauck, Dipl.-Ing. E. Graalfs, Dipl.-Ing. W. Wehnert, Dr.-Ing. W. Döring

(56) Entgegenhaltungen:
- WO-A-87/00597
- US-A- 3 765 440

## Beschreibung

Gegenstand der Erfindung ist ein Kugelhahn nach dem Oberbegriff des Anspruches 1.

Bei einem bekannten Kugelhahn haben beide Sitzringe eine Federeinrichtung in Form eines lippenförmigen Endabschnittes, der sich unterstützt von Spiralfedern im Zwischenraum zum Hauptabschnitt jeweils in einem stirnseitigen Gehäuseschild anlegt. So werden die Sitzringe aufeinander zu gedrückt, wobei sie ein dazwischen angeordnete Kugelküken an sphärischen Dichtflächen schwimmend lagern. Dabei bilden die Dichtflächen und das Kugelküken ein Primärdichtsystem, welches aufgrund der gegeneinanderstoßenden Metallflächen verschleißfest ist. Sekundäre Abdichtungen in den Dichtflächen zur Kugel sind als Weichdichtungen mit einem PTFE-Ring und/oder als Nachschmiereinrichtungen mit einer Schmiermittelnut ausgeführt. Sie sorgen für einen dichten Abschluß in der Öffnungsstellung des Kugelkükens. Ferner begünstigen sie einen Druckaufbau von der Zuström- zur Abströmseite bei geschlossenem Kugelküken, der dieses abdichtend gegen den abströmseitigen Sitzring preßt.

Die schwimmende Lagerung des Kugelkükens setzt axial bewegliche und unter Wirkung der oben beschriebenen Federeinrichtungen gegen das Kugelküken gepreßte Sitzringe voraus. Außerdem sind Abdichtungen zwischen den Sitzringen und der Innenwand des Gehäuses erforderlich. Letztere ist bei dem vorbekannten Hahn ebenfalls durch Weichdichtungen in Form eines elastischen O-Ringes und von Teflon-Dichtungsringen gegeben. In der Praxis haben sich solche Kugelhähne aus einer Kombination von primär metallischen und sekundär nicht metallischen Werkstoffen als verschleißfest gegenüber Transportmedien mit Feststoffpartikeln erwiesen. Sie sind deshalb insbesondere für den Betrieb in Rohrleitungs-Altnetzen geeignet.

Derartige Hähne können hinsichtlich der Gestaltung der Sitzringe symmetrisch ausgebildet sein, so daß die Anström- und Abströmseiten austauschbar sind. Insbesondere für den Einsatz vor und hinter den Verdichtern muß vor allem die abströmseitige Abdichtung gewährleistet sein, wodurch verschiedene Sitzring-Konstruktionen bedingt sein können. Die Abdichtung des abströmseitigen Sitzringes wird durch den Mediendruck auf den Sperrquerschnitt der Kugel und die Stirnfläche des aufströmseitigen Sitzringes und die Abdichtung des aufströmseitigen Sitzringes nur durch den auf seine Stirnfläche ausgeübten Mediendruck unterstützt.

Für Reparatur- und Inspektionsarbeiten muß die Dichtfunktion der Kugelhähne unter Betriebsbedingungen kontrollierbar sein. Dafür hat das Gehäuse ein Entlüftungsventil, über das der Hohlraum zwischen Gehäuse, Sitzringen und Kugel entleerbar ist. Nach dem Entleeren ist am Entlüftungsventil feststellbar, ob infolge von Undichtigkeiten Gas abströmt. Diese Methode hat zum einen den Nachteil, daß sie beim Entlüften mit der Freisetzung ganz erheblicher Gasmengen einhergeht, welche die Umwelt belasten. Bei Kugelhähnen für Gasleitungen erheblichen Durchmessers kann nämlich der Hohlraum ein beträchtliches Volumen aufweisen, das unter erhöhtem Druck erhebliche Norm-Gasvolumina aufnimmt, die bei Entlüftung freigesetzt werden. Überdies ist diese Technik zeitraubend, weil das Entlüften einige Zeit in Anspruch nimmt, bevor eine Messung vorgenommen werden kann. Schließlich wird bei einem Test in Offenstellung des Kugelkükens keine Aussage über den Ort der Undichtigkeit gewonnen, die sowohl am anström-, als auch beim abströmseitigen Sitzring gegeben sein kann.

Aus der EP-B 0 231 302 ist bereits eine Absperrarmatur in Form eines Kugelhahnes bekannt, bei der das Kugelküken schwimmend in komplementär gekrümmten, ringförmigen Gehäusedichtflächen gelagert ist. Diese bilden in der Absperrstellung abströmseitig ein um die Rohrstutzenachse etwa konzentrisch umlaufendes Metall-Metallprimärdichtsystem. Ferner ist wenigstens ein elastischer bzw. elastisch gelagerter Dichtring konzentrisch zur Rohrstutzenachse im Bereich der Gehäusedichtfläche derart eingebaut, daß er einen durch Fertigungstoleranzen bzw. Lagerspiel des schwimmend gelagerten Kugelkükens gebildeten Spalt zwischen Gehäusedichtfläche und Kükenumfangsfläche bis zum Wirksamwerden des Primärdichtsystems zu schließen vermag. In den Gehäusedichtflächen sind in einem Abstand zum Dichtring zur Rohrstutzenachse konzentrische Ringnuten ausgebildet, in die eine durch die Gehäusewand geführte Kontrolleitung eines Bleed-Systems mündet. Vorzugsweise sind zwei Dichtringe mit axialem Abstand zu beiden Seiten der Ringnut im Bereich der Gehäusedichtfläche vorgesehen.

In Geschlossenstellung des Kugelkükens ist die Dichtheit des Primär-Dichtsystems an der Abströmseite über die Ringnut und den darin mündenden Bleed-Ablaß prüfbar. In Offenstellung des Kükens ist bei einer Ringnut zwischen Weichdichtungen des Sekundär-Dichtsystems prüfbar, ob diese zuverlässig abdichten. Somit ist bei beiden Betriebszuständen eine Dichtheitsprüfung möglich.

Der vorbekannte Kugelhahn hat jedoch den Nachteil, daß er aufgrund der Gehäusedichtflächen und des erforderlichen Zusammenfügens der Gehäuseteile durch eine Schweißverbindung nach dem Einbau der Kugel eine enorme Fertigungsgenauigkeit voraussetzt. Außerdem wäre eine Beschichtung der Gehäusedichtflächen technologisch sehr aufwendig.

Aus der AT-318 337 ist ein Kugelhahn mit axial beweglichen Sitzringen bekannt. Zur Abdichtung gegenüber der Kugel haben die Sitzringe eine Dichtfläche mit Weichdichtungen und eine in diese Dichtfläche mündende Schmiermittelleitung. Die Abdichtung zum Gehäuse wird durch Weichdichtungen bewirkt. Auf dieser Seite mündet eine Druckleitung, durch die Schmiermittel zum Erhöhen des Anpreßdruckes des Sitzringes gegen das Kugelküken geleitet werden kann. Dieser Stand der Technik befaßt sich nur mit der Abdichtung des Kugelkükens im Gehäuse. Maßnahmen zur Prüfung der Dichtigkeit sind darin nicht beschrieben.

Gleiches gilt für die DE-AS 10 26 586. Nach dieser Druckschrift wird die Abdichtung des Sitzringes zur Kugel ausschließlich durch Schmiermittel unterstützt. Gegenüber dem Gehäuse ist der Sitzring jedoch nur durch Weichdichtungen abgedichtet.

Aus der US-A-3 765 440 ist ein Kugelhahn der eingangs genannten Art bekannt. Dieser weist bereits einen Bleed-Abgriff auf, der in der Ringnut der Dichtfläche zur Kugel mündet. In einem Spalt zwischen Sitzring und Gehäuse mündet eine weitere Leitung, die der Zufuhr von Dichtmittel zum Pressen des Sitzringes gegen die Kugel dient.

Davon ausgehend liegt der Erfindung die Aufgabe zugrunde, einen Kugelhahn der eingangs genannten Art zu schaffen, der auch ein Prüfen der Abdichtung zwischen dem Gehäuse und dem Sitzring zuläßt.

Die Lösung der Aufgabe ist in Anspruch 1 angegeben. Vorteilhafte Ausgestaltungen sind in den Unteransprüchen enthalten.

Bei einem erfindungsgemäßen Kugelhahn ist die Ringnut der Dichtfläche zur Kugel keine Schmiermittelnut, sondern Bestandteil eines Bleed-System. In die Ringnut mündet nämlich eine Kontrolleitung eines Bleed-Abgriffes, die durch die Gehäusewand und den Sitzring geführt ist und deren Trennbereich überbrückt. Hierdurch wird eine Überprüfung der Abdichtung im besonders durch Verschleiß gefährdeten Bereich zwischen Kugelküken und Dichtfläche ermöglicht. Die Prüfung kann in Schließstellung des Kugelkükens am abströmseitigen Sitzring erfolgen, wenn das Kugelküken aufgrund der Druckdifferenz zwischen Zuström- und Abströmseite gegen den Sitzring gepreßt wird. Sie kann aber auch in Schließstellung am zuströmseitigen Sitzring (falls dieser einen Bleed-Abgriff hat) und in Offenstellung an beiden Sitzringen erfolgen, wenn der Sitzring eine sekundäre Abdichtung aufweist. Beim Bleed-Test werden lediglich Gasmengen freigesetzt, die größenordnungsmäßig dem verhältnismäßig geringen Volumen der Ringnut entsprechen. Durch die separaten Sitzringe weist der Kugelhahn bedeutend günstigere Herstellungsvoraussetzungen als bei Gehäusedichtflächen auf.

Der Sitzring hat Dichtflächen zum Gehäuse, die ebenfalls eine sekundäre Abdichtung aufweisen. Hierdurch wird Leckagen auf einem Weg zwischen Gehäuse und Sitzring entgegen gewirkt. Zur Kontrolle dieser Abdichtung ist eine weitere zur Rohrstutzenachse konzentrische Ringnut im Bereich der Dichtflächen zum Gehäuse angeordnet und münden in der weiteren Ringnut eine durch die Gehäusewand geführte weitere Kontrolleitung eines Bleed-Abgriffes. Damit sind sämtliche Umgehungsmöglichkeiten des Sitzringes prüfbar.

Gemäß EP-B1-0 231 302 kann die Ringnut in der sphärischen Umfangsfläche des Kugelkükens ausgebildet sein. Ferner kann sich die weitere Ringnut im Sitzring befinden. Bevorzugt ist jedoch die Ringnut in der Sitzring-Dichtfläche ausgebildet. Ferner befindet sich die weitere Ringnut bevorzugt in der Gehäusewand.

Der Sitzring kann axial über einen zur Rohrstutzenachse konzentrischen O-Ring im Gehäuse abgestützt und gegen das Kugelküken gedrückt sein. Der O-Ring kann zugleich eine sekundäre Abdichtung und eine Federeinrichtung bilden. Ferner kann der Sitzring radial über einen zur Rohrstutzenachse konzentrischen weiteren O-Ring elastisch im Gehäuse abgedichtet sein. Dieser O-Ring ist Bestandteil der sekundären Abdichtung und überbrückt ein die Axialbeweglichkeit des Sitzringes begünstigendes Radialspiel.

Zwecks Kontrolle der sekundären Abdichtung ist die weitere Ringnut bevorzugt zwischen O-Ring und weiterem O-Ring angeordnet.

Die Kontrolleitung kann den Trennbereich mittels eines Übergangsröhrchens überbrücken, das mit einem Relativbewegungen von Sitzring und Gehäuse ausgleichenden Spiel einerseits abdichtend in einer Gehäuseaufnahme und andererseits abdichtend in einer Sitzringaufnahme gehalten ist. Bevorzugt sind Gehäuseaufnahme und Sitzringaufnahme axial zum Rohrstutzen ausgerichtet und hat das Übergangsröhrchen ein geringes Axialspiel.

Zur Abdichtung in den Aufnahmen kann das Übergangsröhrchen an den Enden Aufnahmenuten mit Dichtringen aufweisen. Zur sekundären Abdichtung gegenüber dem Leitungsquerschnitt kann ein mittlerer Dichtring den Trennbereich überbrückend außen an Gehäuse und Sitzring und innen am Übergangsröhrchen anliegen.

Bevorzugt sind die Kontrolleitung für die Dichtfläche zur Kugel und die weitere Kontrolleitung für die Dichtfläche zum Gehäuse in der Gehäusewand zu einer gemeinsamen Kontrolleitung zusammengeführt, die wiederum für eine Prüfung von außen aus dem Gehäuse geführt ist.

Die sekundäre Abdichtung in der Dichtfläche zur Kugel kann als weitere Ringnut eine zur Rohrstutzenachse konzentrische Schmiernut und eine darin mündende, durch Gehäusewand und Sitzring geführte und den Trennbereich überbrückende Schmiermittelleitung haben. Ein solches Sekundär-Dichtmittelsystem kommt bevorzugt für Einsatzfälle in Betracht, bei denen keine Schmiermittel-Verklumpung infolge von festen Verunreinigungen des Strömungsmediums zu befürchten ist. Die Schmiermittelleitung kann den Trennbereich mittels eines weiteren Übergangsröhrchens überbrücken, das mit einem Relativbewegungen von Sitzring und Gehäuse ausgleichenden Spiel einerseits abdichtend in einer weiteren Gehäuseaufnahme und andererseits abdichtend in einer weiteren Sitzringaufnahme gehalten ist. Bevorzugt sind die weitere Gehäuseaufnahme und Sitzringaufnahme radial ausgerichtet und ermöglicht das Spiel eine geringe Schwenkbarkeit des Übergangsröhrchens in einer Ebene durch die Rohrstutzenachse. Auch das weitere Übergangsröhrchen kann an den Enden Aufnahmenuten mit Dichtungen aufweisen.

Bevorzugt sind die Sitzringe unter Spiel in Axialrichtung der Rohrstutzen im Gehäuse angeordnet, wobei das Axialspiel sehr gering sein kann. Zumindest ein Sitzring kann axial über eine Federeinrichtung (z.B. Schraubenfedern) im Gehäuse abgestützt sein, die eine Voranpressung an die Kugel bewirken. Dabei kann es sich um einen Sitzring handeln, der keinen Bleed-Abgriff aufweist. Das ist bevorzugt bei einem Kugelhahn der Fall, der nur eine Absperrichtung aufweist.

Bei einer anderen Bauart haben beide Sitzringe einen Bleed-Abgriff, der in der Dichtfläche zur Kugel und gegebenenfalls in der Dichtfläche zum Gehäuse mündet. Bei diesem Hahn ist die Absperrichtung beliebig, wobei richtungsunabhängig in Sperrstellung ein Bleed-Test vorgenommen werden kann. In Offenstellung sind beide Sitzringe selektiv kontrollierbar.

Schließlich sind bei einer Ausgestaltung für eine Verdrehsicherung ineinandergreifende radiale und axiale Vorsprünge von Gehäuse und Sitzring vorgesehen. Die Verdrehsicherung begünstigt insbesondere die Überbrückung des Trennbereichs durch die Kontrolleitung, wobei dennoch eine axiale Verschiebbarkeit der Sitzringe gewährleistet ist.

Weitere Einzelheiten und Vorteile der Erfindung ergeben sich aus der nachfolgenden Beschreibung der zugehörigen Zeichnungen, die zwei bevorzugte Ausführungsformen zeigen. In den Zeichnungen zeigen:
- Fig. 1: einen Kugelhahn mit Bleed-Abgriff an nur einem Sitzring in einem Teilschnitt durch den Oberbereich;
- Fig. 2: zwei Kugelhähne gemäß Fig. 1 im Einsatz an einem Verdichter in perspektivischer Seitenansicht;
- Fig. 3: einen Kugelhahn mit Bleed-Abgriff an zwei Sitzringen in einem Teilschnitt durch den Oberbereich.

Bei der nachfolgenden Beschreibung sind gegenständlich und funktionell einander entsprechende Bauteile verschiedener Ausführungsformen mit identischen Bezugsziffern bezeichnet. Insoweit hat die Beschreibung für beide Ausführungsformen Gültigkeit.

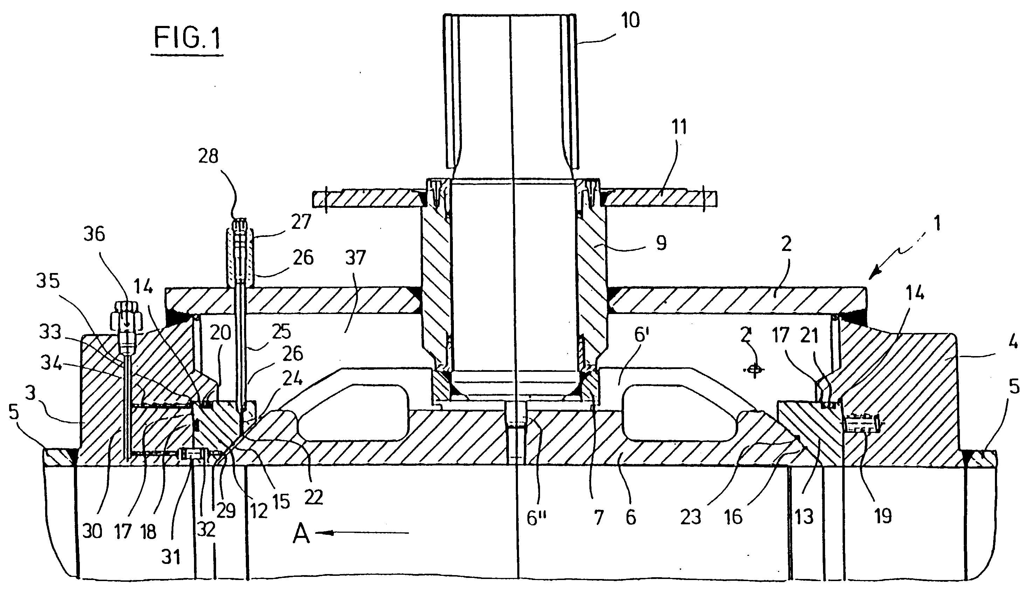

Der Kugelhahn gemäß Fig. 1 hat ein voll verschweißtes Gehäuse 1 mit Gehäusemantel 2, stirnseitigen Schilden 3, 4 und Rohrstutzen 5. In das Gehäuse 1 ist ein Kugelküken 6 mit oberseitigen Mitnehmern 6' eingesetzt, zwischen die ein Schaltwellenfluß einer Schaltwelle 8 greift. Unter dem Schaltwellenfluß 7 ist eine herstellungsbedingte Bohrung des Kugelkükens 6 mittels eines Verschlußstopfens 6'' geschlossen. Die Schaltwelle 8 ist durch den Rohrmantel 2 geführt und darin abdichtend in einem zylindrischen Stempelhals 9 gelagert. Am oberen Ende der Schaltwelle 8 sind Paßfedern 10 für die Verbindung mit einem Schaltgetriebe vorgesehen, das gegen eine Getriebeplatte 11 des Stempelhalses 9 flanschbar ist.

Zur schwimmenden Lagerung der Kugel 6 im Gehäuse 1 sind Sitzringe 12, 13 vorgesehen, die axial und radial in Innenstufen 14 der Schilde 3, 4 abgestützt sind. In Axialrichtung (diese Angabe ist stets auf die Achse der Rohrstutzen 5 bezogen) haben die Sitzringe 12, 13 ein geringfügiges Spiel, so daß das Kugelküken 6 schwimmend gelagert ist.

Die Sitzringe haben innen sphärische Dichtflächen 15, 16, mit denen sie am Mantel des Kugelkükens 6 anliegen. Außen haben sie den Innenstufen 14 der Schilder 3, 4 zugewandte Dichtflächen 17. Die Sitzringe 12, 13 werden mit ihren sphärischen Dichtflächen 15, 16 von Federeinrichtungen gegen das Kugelküken 6 gedrückt. Die Federeinrichtungen sind beim Sitzring 12 als O-Ring 18 ausgebildet, der in einer Nut im stirnseitigen Abschnitt der Dichtfläche 17 gehalten ist. Beim Sitzring 13 hat die Federeinrichtung Schraubenfedern 19, von denen mehrere um die Rohrstutzenachse verteilt in Aufnahmen des Schildes 4 eingesetzt sind. Die Schraubenfedern 19 sind axial ausgerichtet und drücken gegen eine Stirnseite des Sitzringes 13.

Der O-Ring 18 aus Kunststoff oder aus einem Elastomer (z.B. Viton) bewirkt außer einer Federvorspannung eine Abdichtung im Bereich der Dichtfläche 17. Ein zusätzlicher O-Ring 20 aus demselben Material ist an der Umfangsfläche des Sitzringes 12 in einer Nut gehalten und stützt sich ebenfalls an der Innenstufe 14 ab. Der O-Ring 20 gleicht ein für axiale Verschieblichkeit des Sitzringes 12 erforderliches Sitzring-Untermaß bezüglich der Innenstufe 14 aus und bewirkt zugleich eine Abdichtung zwischen Schild 3 und Sitzring 12. Aus denselben Gründen ist in der entsprechenden Umfangsfläche des Sitzringes 13 ein O-Ring 21 in einer Nut gehalten.

Beide Sitzringe 12, 13 sind in ihren sphärischen Dichtflächen 15, 16 mit Schmiernuten 22, 23 versehen. Zumindest beim Sitzring 12 ist die Schmiernut 22 mit einer Schmiermittelleitung 24 verbunden, die radial durch den Sitzring 12 und den Gehäusemantel 2 geführt ist. Die Schmiermittelleitung 24 überbrückt den Trennbereich zwischen Sitzring 12 und Gehäuse 1 mittels eines Übergangsröhrchens 25. Dieses hat beidenends Dichtringe 26 in Aufnahmenuten, die in Aufnahmen des Sitzringes 12 bzw. des Gehäusemantels 2 gehalten sind. Letztere Aufnahme ist als angeschweißte Hülse 27 ausgebildet, in die eine von außen zugängliche Schmiermittelschraube 28 eingesetzt ist. Das Übergangsröhrchen 25 hat zwischen den Dichtringen 26 im Sitzring 12 bzw. im Gehäuse 1 etwas Spiel, so daß es in der Zeichenebene geringfügig schwenkbar ist und Axialbewegungen des Sitzringes 12 folgen kann.

Bei dieser Ausführungsform ist lediglich der Sitzring 12 mit Bleed-Abgriffen ausgestattet. Ein Bleed-Abgriff hat eine Ringnut 29 in der sphärischen Dichtfläche 15. In der Ringnut 29 mündet eine Kontrolleitung 30, die durch den Sitzring 15 und das Gehäuseschild 3 geführt ist. Die Trennfuge zwischen Sitzring 12 und Innenstufe 14 überbrückt sie mittels eines Übergangsröhrchens 31, das beidenends in Aufnahmen von Schild 3 und Sitzring 12 gehalten ist. Das Röhrchen 31 ist in den Aufnahmen mittels eines Dichtringes 32 abgedichtet, der in einer Aufnahmenut des Röhrchens gehalten ist. Das Übergangsröhrchen 31 hat in den Aufnahmen etwas axiales Spiel, so daß es axiale Bewegungen des Sitzringes 12 ausgleichen kann.

Außer diesem Bleed-Abgriff für die Dichtfläche 15 zum Kugelküken 6 ist ein Bleed-Abgriff für die Dichtfläche 17 zum Gehäuse 1 vorgesehen. Diese hat ebenfalls eine Ringnut 33 (in der Zeichnung nur schwach angedeutet), die konzentrisch zur Rohrstutzenachse in der radial erstreckten Fläche der Innenstufe 14 umläuft. In die Ringnut 33 mündet eine weitere Kontrolleitung 34, die im Schild 3 mit der Kontrolleitung 3 zu einer gemeinsamen Kontrolleitung 35 zusammengeführt ist. Die gemeinsame Kontrolleitung 35 ist zu einem Nadelventil 36 geführt, an dem von außen der Bleed-Abgriff stattfinden kann.

Für diesen Kahn sind folgende Betriebs- und Prüfmöglichkeiten gegeben. Er wird in Pfeilrichtung A durchströmt, in der ausschließlich eine gasdichte Absperrung sichergestellt sein muß. In der gezeigten Öffnungsstellung des Kugelkükens 6 wirkt der Mediendruck auf die Stirnflächen der Sitzringe 12, 13 und preßt diese unter primärer Abdichtung gegen die Kugel 6. Außerdem sind am Sitzring 12 die sekundären Abdichtungen durch Schmiermittel im Bereich der Dichtfläche 15 und O-Ringe 18, 20 (Weichdichtungen) im Bereich der Dichtfläche 17 wirksam. Mittels des Bleed-Abgriffes bei 35 ist die Wirkung der Abdichtung des Kugelkükens 6 durch den Sitzring 12 bei geöffnetem Kugelhahn ohne Betriebsunterbrechung prüfbar. Falls der Sitzring 12 abdichtet, verhindern die primären und sekundären Abdichtungen auch ein Nachströmen von Gasen vom Hohlraum 37 zwischen Gehäuse 1, Sitzringen 12 und Kugelküken 6 aus in die Ringnuten 29, 33. Aufströmseitig ist eine entsprechende Dichtwirkung des Sitzringes 13 nur über einen Gehäuse-Lüftungsauslaß 2' prüfbar.

In Schließstellung des Kugelkükens 6, die durch dessen Drehung um 90° gegenüber der gezeigten Ausrichtung erreichbar ist, wird das Kugelküken 6 infolge der Druckdifferenz zwischen Abströmseite (in der Zeichnung links) und Zuströmseite (in der Zeichnung rechts) gegen die sphärische Dichtfläche 15 des Sitzringes 12 gepreßt. Der Aufbau der Anpreßkraft wird durch die sekundäre Abdichtung des Sitzringes 13 mittels Schmiersystem 23 und O-Ring 21 gefördert. Die hohen Anpreßkräfte bewirken eine Primärdichtung Metall-Metall im Kontaktbereich von Dichtfläche 15 und Kugelküken 16. In dieser Lage ermöglicht der Bleed-Abgriff bei 35 ebenfalls die Feststellung von Undichtigkeiten, die einen Leckagestrom vom Hohlraum 37 in den abströmseitigen Rohrstutzen 5 bewirken können. Für eine Prüfung der Abdichtung durch den aufströmseitigen Sitzring 13 muß ebenfalls der Gehäuse-Lüftungsauslaß 2' herangezogen werden.

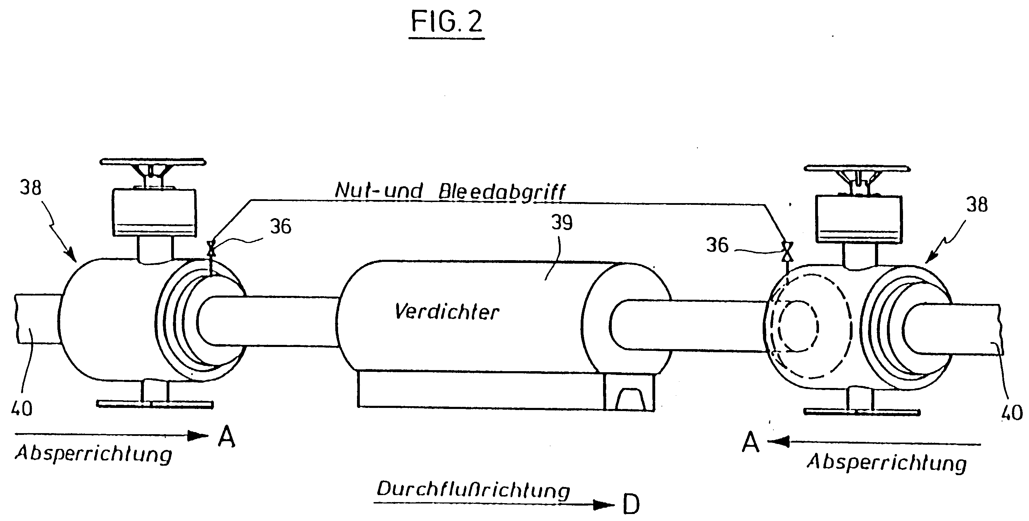

Gemäß Fig. 2 sind zwei Kugelhähne 38 der zuvor beschriebenen Art vor und hinter einem Verdichter 39 einsetzbar. Bei Verdichterbetrieb ist die Gasströmung in Durchflußrichtung D gerichtet. Für Kontroll- und Inspektionsarbeiten am Verdichter 39 muß dieser vom Gasleitungsnetz 40 abkoppelbar sein. Dafür sind die beiden Kugelhähne 38 mit ihrem abströmseitigen Sitzring und dem zugeordneten Bleed-Abgriff 36 jeweils dem Verdichter 39 zugewandt. Die Absperrichtungen A der beiden Kugelhähne 38 sind also entgegengesetzt gerichtet.

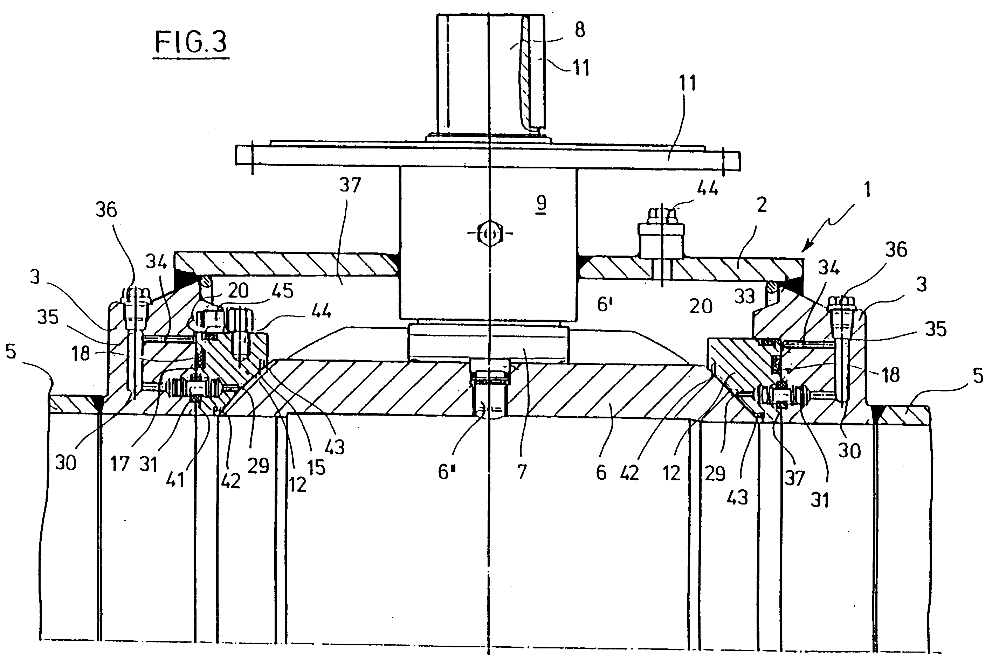

Beim Kugelhahn gemäß Fig. 3 stimmen die Sitzringe 12 überein und sind jeweils mit Bleed-Abgriffen zum Kugelküken 6 und zum Gehäuseschild 3 ausgestattet. Die Bleed-Abgriffe sind entsprechend Fig. 1 konstruiert, wobei ein zusätzlicher Dichtring 41 die Trennfuge überbrückend außen an Schild 3 und Sitzring 12 und innen an einem eingeschnürten Zylinderabschnitt des Übergangsröhrchens 31 anliegt.

Hinsichtlich der sekundären Abdichtung ist in den sphärischen Dichtflächen 15 zur Kugel insofern ein Unterschied gegeben, als dort zur Rohrstutzenachse konzentrische Weichdichtungen 42, 43 aus PTFE vorgesehen sind. Der Dichtring 42 ist zylindrisch und axial ausgerichtet, wogegen der Dichtring 43 scheibenförmig mit radialer Ausrichtung ist.

Die Dichtfläche 17 hat wie bei dem vorherigen Ausführungsbeispiel Weichdichtungen 18, 20 in Form von Viton-Ringen, die außen jeweils zwei PTFE-back up-Ringe aufweisen.

Schließlich ist bei dieser Variante für den in der Zeichnung linken Sitzring 12 eine Verdrehsicherung dargestellt. Diese hat einen radial ausgerichteten Bolzen 44 des Sitzringes 12, der mit zwei axial ausgerichteten Bolzen 45 des Gehäuseschildes 3 zusammenwirken. Die Bolzen 44, 45 sind in ihre jeweiligen Trägerbauteile eingeschraubt.

Der Kugelhahn gemäß Fig. 3 ist in beiden Richtungen durchström- und absperrbar. In der gezeichneten Öffnungsstellung des Kugelkükens 6 bewirken insbesondere die sekundären Abdichtungen 18, 20, 42, 43 eine Trennung des Durchströmquerschnittes vom Hohlraum 37. Zusätzlich wirkt der Mediendruck auf die Stirnflächen beider Sitzringe 12 und drückt diese abdichtend gegen das Kugelküken 6. Die Wirksamkeit der Abdichtungen ist im Durchströmbetrieb mittels der Bleed-Abgriffe bei 36 prüfbar.

In Sperrstellung des um 90° zur Zeichenebene gedrehten Kugelkükens 6 begünstigen die sekundären Abdichtungen 42, 43, 18, 20 den Aufbau eines Anpreßdruckes, der die Kugel abdichtend gegen den abströmseitigen Sitzring 12 drückt. Der zuströmseitige Sitzring 12 wird aufgrund des Mediendruckes gegen seine Stirnfläche abdichtend gegen die Kugel 6 gedrückt, wodurch der Druck der Kugel gegen den abströmseitigen Sitzring 12 noch erhöht wird. Auch in dieser Sperrposition ist die Abdichtwirkung gegenüber einem vom Hohlraum 37 in den abströmseitigen Rohrstutzen 5 gerichteten Gasstrom über den Bleed-Abgriff bei 36 prüfbar. In dieser Lage ist aber auch der zuströmseitige Sitzring 12 auf Abdichtwirkung prüfbar, wozu der zuströmseitige Bleed-Abgriff bei 36 oder herkömmlich ein Lüftungsventil 44 herangezogen wird.

Aufgrund der symmetrischen Sitzring-Ausbildung können die vorbeschriebenen Prüfungen auch bei umgekehrter Strömungs- und Absperrichtung vorgenommen werden.

## Patentansprüche

1. Kugelhahn, mit einem durchströmbare Rohrstutzen (5) aufweisenden Gehäuse (1), einem über eine Schaltwelle (8) drehbaren Kugelküken (6) darin, konzentrisch um die Rohrstutzenachse angeordneten Sitzringen (12, 13) für das Kugelküken, die zum Ausgleich axialer Toleranz unter relativer Beweglichkeit zum Gehäuse gegen das Kugelküken (6) gedrückt sind, wobei zumindes ein Sitzring (12) Dichtflächen (15, 17) zum Kugelküken und zum Gehäuse mit sekundärer Abdichtung durch Nachschmiereinrichtungen (22) und/oder Weichdichtungen (18, 20, 42, 43) aufweist, eine zur Rohrstutzenachse konzentrische Ringnut (29) im Bereich der Dichtfläche (15) des Sitzringes zum Kugelküken angeordnet ist und in der Ringnut (29) der Dichtfläche (15) zum Kugelküken (6) eine durch Gehäusewand (3) und Sitzring (12) geführte und deren Trennbereich überbrückende Kontrolleitung (30) eines Bleed-Abgriffes mündet, dadurch gekennzeichnet, daß die Kontrolleitung (30) vom Trennbereich abgedichtet ist, und daß eine weitere zur Rohrstutzenachse konzentrische Ringnut (33) im Bereich der Dichtfläche (17) zum Gehäuse (3) angeordnet ist und in der weiteren Ringnut eine durch die Gehäusewand (3) geführte weitere Kontrolleitung (34) eines Bleed-Abgriffes mündet.

2. Kugelhahn nach Anspruch 1, dadurch gekennzeichnet, daß die Ringnut (29) in der Sitzring-Dichtfläche (15) ausgebildet ist.

3. Kugelhahn nach Anspruch 1 oder 2, dadurch gekennzeichnet, daß die weitere Ringnut (33) in der Gehäusewand (3) ausgebildet ist.

4. Kugelhahn nach einem der Ansprüche 1 bis 3, dadurch gekennzeichnet, daß der Sitzring (12) axial über einen zur Rohrstutzenachse konzentrischen, am Gehäuse (3) abgestützten O-Ring (18) an das Kugelküken (6) gedrückt ist.

5. Kugelhahn nach einem der Ansprüche 1 bis 4, dadurch gekennzeichnet, daß der Sitzring radial über einen zur Rohrstutzenachse konzentrischen weiteren O-Ring (20) im Gehäuse (3) abgedichtet ist.

6. Kugelhahn nach Anspruch 4 und 5, dadurch gekennzeichnet, daß die weitere Ringnut (33) zwischen O-Ring (18) und weiterem O-Ring (20) angeordnet ist.

7. Kugelhahn nach einem der Ansprüche 1 bis 6, dadurch gekennzeichnet, daß die Kontrolleitung (30) den Trennbereich mittels eines Übergangsröhrchens (31) überbrückt, das mit einem Relativbewegungen von Sitzring (12) und Gehäuse (3) ausgleichenden Spiel einerseits abdichtend in einer Gehäuseaufnahme und andererseits abdichtend in einer Sitzringaufnahme gehalten ist.

8. Kugelhahn nach Anspruch 7, dadurch gekennzeichnet, daß Gehäuseaufnahme und Sitzringaufnahme axial ausgerichtet sind und das Übergangsröhrchen (31) darin ein Axialspiel hat.

9. Kugelhahn nach Anspruch 7 oder 8, dadurch gekennzeichnet, daß das Übergangsröhrchen (31) an den Enden Aufnahmenuten mit Dichtringen (32) aufweist.

10. Kugelhahn nach einem der Ansprüche 7 bis 9, dadurch gekennzeichnet, daß ein mittlerer Dichtring (41) den Trennbereich überbrückend außen am Gehäuse (3) und Sitzring (12) und innen am Übergangsröhrchen (31) anliegt.

11. Kugelhahn nach einem der Ansprüche 1 bis 10, dadurch gekennzeichnet, daß die Kontrolleitung (30) und weitere Kontrolleitung (34) in der Gehäusewand (3) zu einer gemeinsamen Kontrolleitung (35) zusammengeführt und die gemeinsame Kontrolleitung nach außen geführt ist.

12. Kugelhahn nach einem der Ansprüche 1 bis 11, dadurch gekennzeichnet, daß die sekundäre Abdichtung der Dichtfläche (15) zur Kugel eine zur Rohrstutzenachse konzentrische Schmiernut (22) und eine darin mündende, durch Gehäusewand (2) und Sitzring (12) geführte und deren Trennbereich (37) überbrückende Schmiermittelleitung (22) hat.

13. Kugelhahn nach Anspruch 12, dadurch gekennzeichnet, daß die Schmiermittelleitung (24) den Trennbereich (37) mittels eines weiteren Übergangsröhrchens (25) überbrückt, das mit einem Relativbewegungen von Sitzring (12) und Gehäuse (2) zulassendem Spiel einerseits abdichtend in einer weiteren Gehäuseaufnahme und andererseits abdichtend in einer weiteren Sitzringaufnahme gehalten ist.

14. Kugelhahn nach Anspruch 13, dadurch gekennzeichnet, daß die weitere Gehäuseaufnahme und die weitere Sitzringaufnahme radial ausgerichtet sind und das Spiel des Übergangsröhrchens (25) dessen Schwenkbarkeit in einer Ebene durch die Rohrstutzenachse gestattet.

15. Kugelhahn nach Anspruch 13 oder 14, dadurch gekennzeichnet, daß das weitere Übergangsröhrchen (25) an den Enden Aufnahmenuten mit Dichtungen (26) aufweist.

16. Kugelhahn nach einem der Ansprüche 1 bis 15, dadurch gekennzeichnet, daß die Sitzringe (12, 13) unter Spiel in Axialrichtung der Rohrstutzen (5) im Gehäuse (1) angeordnet sind.

17. Kugelhahn nach einem der Ansprüche 1 bis 16, dadurch gekennzeichnet, daß zumindest ein Sitzring (13) axial über eine Federeinrichtung (19) im Gehäuse (4) abgestützt ist.

18. Kugelhahn nach einem der Ansprüche 1 bis 17, dadurch gekennzeichnet, daß der über die Federeinrichtung (19) abgestützte Sitzring (13) keinen Bleed-Abgriff aufweist.

19. Kugelhahn nach einem der Ansprüche 1 bis 18, dadurch gekennzeichnet, daß beide Sitzringe (12) einen Bleed-Abgriff haben.

20. Kugelhahn nach einem der Ansprüche 1 bis 19, dadurch gekennzeichnet, daß für eine Verdrehsicherung ineinandergreifende radiale und axiale Vorsprünge (44, 45) von Sitzring (12) und Gehäuse (2) vorgesehen sind.

## Claims

1. A ball valve which comprises a housing (1) including pipe sockets (5) allowing a medium to pass through, a ball means (6) adapted to be rotatable by means of a control shaft (8), fitting rings (12, 13) for said ball means arranged concentrically about the pipe socket axis and pressed against said ball means (6) for compensating axial tolerances while allowing a movability relative to said housing, at least one fitting ring (12) comprising sealing surfaces (15, 17) towards said ball means and said housing including a secondary sealing provided by lubricating means (22) and/or soft seals (18, 20, 42, 43), an annular groove (29) extending concentrically with respect to said pipe socket axis and being arranged within the area of said fitting ring sealing surface (15) towards said ball means, and a control line (30) of a bleed point opening into said annular groove (29) of said sealing surface (15) towards said ball means (6) after passing through the housing wall (3) and said fitting ring (12) and bridging the separating area thereof, characterized in that said control line (30) is sealed from said separating area, and that a further annular groove (33) provided concentrically with respect to said pipe socket axis is arranged within the area of said sealing surface (17) towards said housing (3) and a further control line (34) of a bleed point opens into said further annular groove after passing through said housing wall (3).

2. The ball valve according to claim 1, characterized in that said annular groove (29) is defined within said fitting ring sealing surface (15).

3. The ball valve according to claim 1 or 2, characterized in that said further annular groove (33) is defined within said housing wall (3).

4. The ball valve according to any of claims 1 to 3, characterized in that said fitting ring (12) is axially pressed against said ball means (6) by means of an O-ring (18) provided concentrically with respect to said pipe socket axis and supported by said housing (3).

5. The ball valve according to any of claims 1 to 4, characterized in that said fitting ring is sealed radially by means of a further O-ring (20) provided concentrically with respect to said pipe socket axis.

6. The ball valve according to claims 4 and 5, characterized in that said further annular groove (33) is arranged between said O-ring (18) and said further O-ring (20).

7. The ball valve according to any of the claims 1 to 6, characterized in that said control line (30) bridges said separating area by means of a transition pipe (31) which, by allowing a clearance in order to compensate any movements of said fitting ring (12) and said housing (3) relative to each other, on the one hand, is sealingly held within an accommodation of said housing and, on the other hand, is sealingly held within an accommodation of said fitting ring.

8. The ball valve according to claim 7, characterized in that said accommodation of said housing and said accommodation of said fitting ring are axially aligned and said transition pipe (31) has an axial clearance therein.

9. The ball valve according to claim 7 or 8, characterized in that at the ends said transition pipe (31) comprises receiving grooves including sealing rings (32).

10. The ball valve according to any of the claims 7 to 9, characterized in that, on the outside, a central sealing ring (41) bridging said separating area engages said housing (3) and said fitting ring (12) while, on the inside, it engages said transition pipe (31).

11. The ball valve according to any of the claims 1 to 10, characterized in that said control line (30) and said further control line (34) are joined to each other so as to form a common control line (35) and said common control line is led outwardly.

12. The ball valve according to any of the claims 1 to 11, characterized in that said secondary sealing of said sealing surface (15) towards said ball means comprises a lubricating groove (22) provided concentrically with respect to said pipe socket axis, and a lubricant line (24) opening into said lubricating groove after- passing through said housing wall (2) and said fitting ring (12) and bridging said separating area (37) thereof.

13. The ball valve according to claim 12, characterized in that said lubricant line (24) bridges said separating area (37) by means of a further transition pipe (25) which, by allowing a clearance in order to compensate any movements of said fitting ring (12) and said housing (2) relative to each other, on the one hand, is sealingly held within a further accommodation of said housing and, on the other hand, is sealingly held within a further accommodation of said fitting ring.

14. The ball valve according to claim 13, characterized in that said further accommodation of said housing and said further accommodation of said fitting ring are radially aligned and the clearance of said transition pipe (25) allows the latter to pivot about said pipe socket axis in one plane.

15. The ball valve according to claim 13 or 14, characterized in that at the ends said further transition pipe (25) comprises receiving grooves including seals (26).

16. The ball valve according to any of the claims 1 to 15, characterized in that, by allowing a clearance in the axial direction of said pipe socket (5), said fitting rings (12, 13) are arranged within said housing (1).

17. The ball valve according to any of the claims 1 to 16, characterized in that at least one fitting ring (13) is axially supported within said housing (4) by means of a spring means (19).

18. The ball valve according to any of the claims 1 to 17, characterized in that said fitting ring (13) supported by said spring means (19) does not comprise any bleed point.

19. The ball valve according to any of the claims 1 to 18, characterized in that each of the two fitting rings (12) comprises a bleed point.

20. The ball valve according to any of the claims 1 to 19, characterized in that there are provided radial and axial projections (44, 45) of said fitting ring (12) and said housing (2) engaging each other so as to prevent turning.

## Revendications

1. Robinet à tournant sphérique, comportant un carter (1), permettant de laisser passer le débit et présentant des raccords tubulaires (5), à l'intérieur, un obturateur sphérique (6) pouvant tourner au moyen d'un axe de commande (8), des bagues de siège (12, 13) de l'obturateur sphérique, qui sont disposées concentriquement autour de l'axe des raccords tubulaires et qui sont pressées contre l'obturateur sphérique (6) pour rattrapper des tolérances axiales en ayant une mobilité relative par rapport au carter,
étant entendu qu'au moins une bague de siège (12) présente des surfaces d'étanchéité (15, 17) pour l'obturateur sphérique (6) et pour le carter, avec une étanchéité secondaire assurée par des dispositifs de graissage complémentaire (22) et/ou des joints d'étanchéité souples (18, 20, 42, 43), qu'une rainure annulaire (29), concentrique à l'axe des raccords tubulaires, est disposée dans la zone de la surface d'étanchéité (15) de la bague de siège de l'obturateur sphérique, et que, dans cette rainure annulaire (29) de la surface d'étanchéité (15) de l'obturateur sphérique (6), débouche une conduite de contrôle (30) d'une prise de contrôle de fuites, traversant la paroi (3) du carter et la bague de siège (12) et franchissant leur zone de séparation,
caractérisé en ce que la canalisation de contrôle (30) est rendue étanche par rapport à la zone de séparation et en ce qu'une autre rainure annulaire (33), concentrique à l'axe des raccords tubulaires, est disposée dans la zone de la surface d'étanchéité (17) du carter (3) et, dans cette autre rainure annulaire, débouche une autre conduite de contrôle (34) d'une prise de contrôle de fuites, traversant la paroi (3) du carter.

2. Robinet à tournant sphérique suivant la revendication 1, caractérisé en ce que la rainure annulaire (29) est réalisée dans la surface d'étanchéité (15) de la bague de siège.

3. Robinet à tournant sphérique suivant la revendication 1 ou la revendication 2, caractérisé en ce que l'autre rainure annulaire (33) est réalisée dans la paroi (3) du carter.

4. Robinet à tournant sphérique suivant l'une des revendications 1 à 3, caractérisé en ce que la bague de siège (12) est comprimée axialement contre l'obturateur sphérique (6), au moyen d'un anneau torique (18) concentrique à l'axe des raccords tubulaires et prenant appui sur le carter (3),

5. Robinet à tournant sphérique suivant l'une des revendications 1 à 4, caractérisé en ce que la bague de siège est montée de façon étanche radialement dans le carter (3) au moyen d'un autre anneau torique (20) concentrique à l'axe des raccords tubulaires.

6. Robinet à tournant sphérique suivant la revendication 4 et la revendication 5, caractérisé en ce que l'autre rainure annulaire (33) est disposée entre l'anneau torique (18) et l'autre anneau torique (20).

7. Robinet à tournant sphérique suivant l'une des revendications 1 à 6, caractérisé en ce que la conduite de contrôle (30) franchit la zone de séparation au moyen d'un petit tube de jonction (31) qui est maintenu, avec un jeu rattrapant des mouvements relatifs de la bague de siège (12) et du carter (3), avec étanchéité, d'une part, dans un logement du carter et, d'autre part, dans un logement de la bague de siège.

8. Robinet à tournant sphérique suivant la revendication 7, caractérisé en ce que le logement du carter et le logement de la bague de siège ont une direction axiale et que le petit tube de jonction (31) situé à l'intérieur possède un jeu axial.

9. Robinet à tournant sphérique suivant la revendication 7 ou la revendication 8, caractérisé en ce que le petit tube de jonction (31) présente, à ses extrémités, des rainures de réception pourvues de bagues d'étanchéité (32).

10. Robinet à tournant sphérique suivant l'une des revendications 7 à 9, caractérisé en ce qu'une bague d'étanchéité médiane (41) est placée, à l'extérieur, contre le carter (3) et, à l'intérieur, contre le petit tube de jonction (31), en franchissant la zone de séparation,.

11. Robinet à tournant sphérique suivant l'une des revendications 1 à 10, caractérisé en ce que la conduite de contrôle (30) et l'autre conduit de contrôle (34) se rejoignent dans la paroi (3) du carter en une conduite de contrôle commune (35), et en ce que cette conduite de contrôle commune (35) conduit à l'extérieur.

12. Robinet à tournant sphérique suivant l'une des revendications 1 à 11, caractérisé en ce que l'étanchéité secondaire de la surface d'étanchéité (15) par rapport à la sphère présente une rainure de graissage (22) concentrique à l'axe des raccords tubulaires et une canalisation de moyen de graissage (24) traversant la paroi (2) du carter et la bague de siège (12), et franchissant leur zone de séparation (37).

13. Robinet à tournant sphérique suivant la revendication 12, caractérisé en ce que la canalisation de moyen de graissage (22) franchit la zone de séparation (37) au moyen d'un autre petit tube de jonction (25) qui est maintenu, avec un jeu permettant des mouvements relatifs entre la bague de siège (12) et le carter (2), en faisant étanchéité, d'une part, dans un autre logement du carter et, d'autre part, dans un autre logement de la bague de siège.

14. Robinet à tournant sphérique suivant la revendication 13, caractérisé en ce que l'autre logement du carter et l'autre logement de la bague de siège ont une direction radiale et en ce que le jeu du petit tube de jonction (25) lui permet de pivoter dans un plan passant par l'axe des raccords tubulaires.

15. Robinet à tournant sphérique suivant la revendication 13 ou la revendication 14, caractérisé en ce que l'autre petit tube de jonction (25) présente, à ses extrémités, des rainures de réception pourvues de joints d'étanchéité (26).

16. Robinet à tournant sphérique suivant l'une des revendications 1 à 15, caractérisé en ce que les bagues de siège (12, 13) sont disposées dans le carter (1) avec un jeu dans la direction axiale des raccords tubulaires (5).

17. Robinet à tournant sphérique suivant l'une des revendications 1 à 16, caractérisé en ce qu'au moins une bague de siège (13) s'appuie axialement dans le carter (4) par l'intermédiaire d'un dispositif à ressort (19).

18. Robinet à tournant sphérique suivant l'une des revendications 1 à 17, caractérisé en ce que la bague de siège (13) qui s'appuie par l'intermédiaire du dispositif à ressort (19) ne présente pas de prise de contrôle de fuites.

19. Robinet à tournant sphérique suivant l'une des revendications 1 à 17, caractérisé en ce que les deux bagues de siège (12) présentent une prise de contrôle de fuites.

20. Robinet à tournant sphérique suivant l'une des revendications 1 à 19, caractérisé en ce que des saillies (44, 45), radiale et axiale, de la bague de siège (12) et du carter (2), faisant prise l'une dans l'autre, sont prévues pour empêcher une rotation.
